# EUROPEAN PATENT SPECIFICATION

(11) **EP 2 439 080 B1**
(45) Date of publication and mention of the grant of the patent: **07.08.2013**
(21) Application number: 11183914.8
(22) Date of filing: 05.10.2011
(51) Int. Cl.: B60C 9/14, B60C 9/13, B60C 9/11, B60C 15/06

(54) **A pneumatic tire with a woven or knitted reinforcement**
Luftreifen mit gewobener oder gewirkter Verstärkung
Pneu avec renfort tissé ou tricoté

(30) Priority: 07.10.2010 US 899727
(43) Date of publication of application: 11.04.2012
(73) Proprietor: The Goodyear Tire & Rubber Company, Akron, OH 44316-0001 (US)
(72) Inventor: Donckels, Yves, B-5360 Natoye (BE); Imhoff, Serge Julien Auguste, L-9184 Schrondweiler (LU)
(74) Representative: Kutsch, Bernd

(56) References cited:
- JP-A- 2003 306 009
- JP-A- 2005 145 318

## Description

### Field of the Invention

The present invention relates to a pneumatic tire, and more particularly, to a low rolling resistance pneumatic tire.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A variety of structural design approaches have been used to control separation of tire elements in the bead regions of a tire. For example, one method has been to provide a "flipper" surrounding the bead and the bead filler. The flipper works as a spacer that keeps the ply from making direct contact with the inextensible beads, allowing some degree of relative motion between the ply, where it turns upward under the bead, and the respective beads. In this role as a spacer, a flipper may reduce disparities of strain on the ply and on the adjacent rubber components of the tire (e.g., the filler apex, the sidewall rubber, in the bead region, and the elastomeric portions of the ply itself).

The flipper may be made of a square woven fabric that is a textile in which each fiber, thread, or cord has a generally round cross-section. When a flipper is cured with a tire, the stiffness of the fibers/cords becomes essentially the same in any direction within the plane of the textile flipper.

In addition to the use of flippers as a means by which to reduce the tendency of a ply to separate, or as an alternative, another method that has been used involves the placement of "chippers." A chipper is a circumferentially deployed metal or fabric layer that is disposed within the bead region in the portion of the tire where the bead fits onto the wheel rim. More specifically, the chipper lies inward of the wheel rim (i.e., toward the bead) and outward (i.e., radially outward, relative to the bead viewed in cross section) of the portion of the ply that turns upward around the bead. Chippers serve to stiffen, and increase the resistance to flexure of, the adjacent rubber material, which itself is typically adjacent to the turnup ply endings.

JP-A- 2003/306009 and JP-A- 2005/145318 each describe a tire comprising a reinforcing structure comprising a fabric.

### Summary of the Invention

The invention relates to a pneumatic tire in accordance with claim 1.

Dependent claims refer to preferred embodiments of the invention.

A pneumatic tire in accordance with a preferred aspect of the present invention has an axis of rotation. The pneumatic tire includes a carcass having at least one reinforced ply and a reinforcing structure proximal to a bead region of the pneumatic tire, a tread disposed radially outward of the carcass, and a belt structure disposed radially between the carcass and the tread. The reinforcing structure includes at least one layer of an open construction woven or knitted fabric having warp yarns extending in a circumferential direction and weft yarns of the carcass ply extending in a radial direction.

In one aspect of the present invention, the woven fabric may have a 5 EPI to 18 EPI warp pair construction and a 5 EPI to 35 EPI weft construction (EPI = ends per 2.54 cm).

In another preferred aspect of the present invention, the warp yarns are 1220/1 dtex rayon-and the weft yarns are 1840/2 dtex rayon or 2200/2 dtex polyester constructions. Other examples of constructions to be used as weft may be: 1100/2, 1440/2, 1670/2, 2200/2 dtex polyester or 220/2, 1840/2, 1840/3, 2440/2 dtex rayon.

In still another preferred aspect of the present invention, the warp yarns have a density of 18 EPI and the weft yarns have a density of 12 EPI.

In still another preferred aspect of the present invention, the fabric has a LENO 2T or knitted configuration with a 5 EPI to 18 EPI warp pair construction and a 5 EPI to 35 EPI weft construction.

In yet another preferred aspect of the present invention, the warp yarns have a density of 14 EPI and the weft yarns have a density of 26 EPI.

In still another preferred aspect of the present invention, the pneumatic tire is a high performance tire.

In yet another preferred aspect of the present invention, the woven fabric further comprises an adhesion promoter disposed thereon.

In still another preferred aspect of the present invention, the reinforcing structure of the carcass has one or more layers of woven or knitted fabric.

In yet another preferred aspect of the present invention, the warp yarns comprise at least two fibers of different fiber materials.

In yet another aspect of the invention the weft yarns of the reinforced ply may extend at least substantially in the radial direction, i.e. in the radial direction +/- 10 degrees, preferably in the radial direction +/- 5 degrees or exactly in the radial direction.

In yet another aspect of the invention the reinforcing structure may start at distance from a turn up end or an end portion of the reinforced ply in at least one bead region of the tire, the distance being at least 20 mm, alternatively at least 50 mm or at least 100 mm.

In yet another aspect of the invention the tire may be symmetric with regard to the location(s) of the reinforcing structure. In an other aspect of the invention, the tire may be asymmetric with regard to the location(s) of the reinforcing structure.

In yet another aspect of the invention the tire may be a runflat passenger tire.

In yet another aspect of the invention the fabric may have a LENO 2T configuration preferably with a 5 ends per 2.54 cm to 18 ends per 2.54 cm warp pair construction and a 5 ends per 2.54 cm to 35 ends per 2.54 cm weft pair construction.

### Definitions

"Apex" means an elastomeric filler located radially above the bead core and between the plies and the turnup ply.

"Axial" and "axially" are used herein to refer to lines or directions that are parallel to the axis of rotation of the tire.

"Cable" means a cord formed by twisting together two or more plied yarns.

"Carcass" means the tire structure apart from the belt structure, tread, undertread, and sidewall rubber over the plies, but including the beads.

"Circumferential" means lines or directions extending along the perimeter of the surface of the annular tire parallel to the Equatorial Plane (EP) and perpendicular to the axial direction.

"Cord" means one of the reinforcement strands which the reinforcement structures of the tire comprise.

"Dtex" means the weight in grams per 10,000 meters.

"Fiber" is a unit of matter, either natural or man-made that forms the basic element of filaments.

"Knitted" means intertwining threads in a series of connected loops. For example, knitted may define a method by which thread or yarn is turned into a fabric of consecutive loops, called stitches. As each row of stitches progresses, a new loop may be pulled through an existing loop.

"Radial" and "radially" are used to mean directions radially toward or away from the axis of rotation of the tire.

"Sidewall" means that portion of a tire between the tread and the bead.

"Tread" means a molded rubber component which, when bonded to a tire casing, includes that portion of the tire that comes into contact with the road when the tire is normally inflated and under normal load.

"Turnup end" means the portion of a carcass ply that turns upward (i.e., radially outward) from the beads about which the ply is wrapped.

"Woven" means interlacing lengthwise yarns (warp) with filling yarns (weft). The interlaced yarns may be two or more sets of yarns at right angles to each other.

"Yarn" is a generic term for a continuous strand of textile fibers or filaments. Yarn occurs in the following forms: 1) a number of fibers twisted together; 2) a number of filaments laid together without twist; 3) a number of filaments laid together with a degree of twist; 4) a single filament with or without twist (monofilament); 5) a narrow strip of material with or without twist.

### Brief Description of the Drawings

The structure, operation, and advantages of the present invention will become more apparent upon contemplation of the following description as viewed in conjunction with the accompanying drawings, wherein:
FIG. 1 represents a schematic cross-sectional view of an example tire for use with the present invention;
FIG. 2 represents a schematic detail view of the bead region of the example tire shown in FIG. 1;
FIG. 3 represents a schematic detail view of a section of carcass ply in accordance with the present invention;
FIG. 4 represents a schematic detail of an example bead fabric structure in accordance with the present invention; and
FIG. 5 represents a schematic detail of another example bead fabric structure in accordance with the present invention.

### Detailed Description of an Example Embodiment

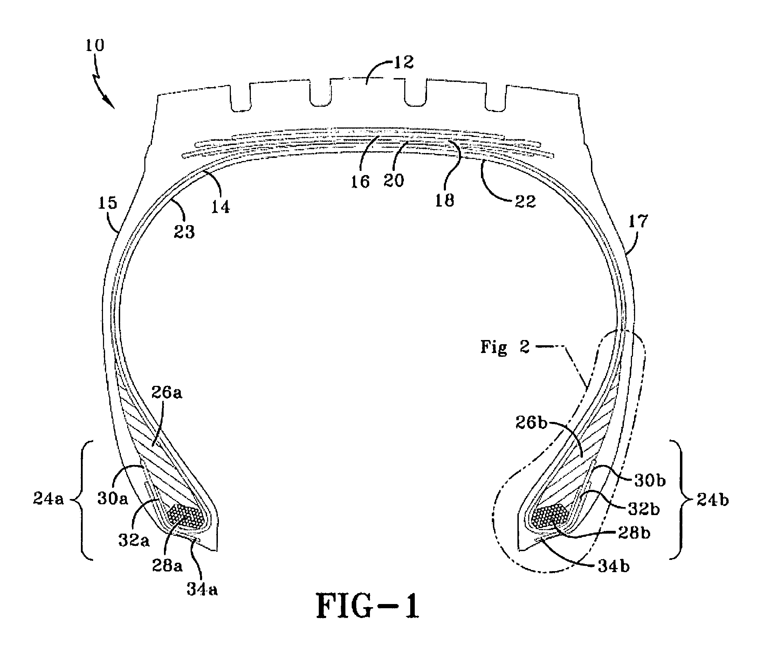

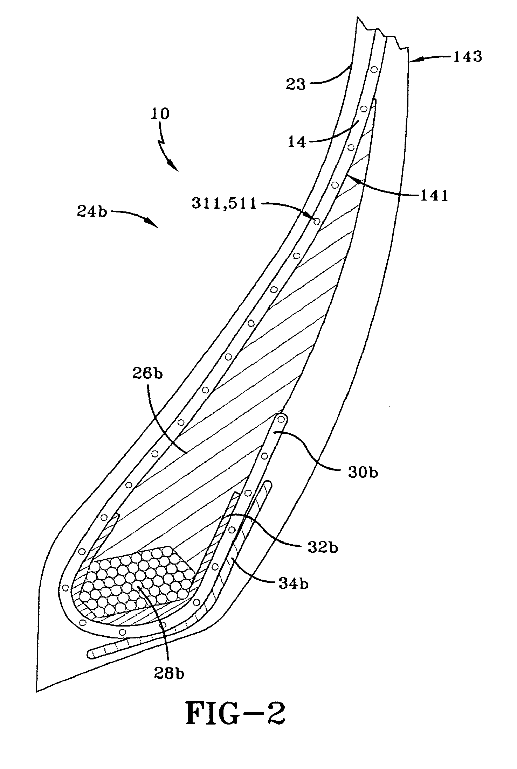

FIG. 1 shows an example tire 10 for use with the present invention. The example tire 10 has a tread 12, an innerliner 23, a belt structure 16 comprising belts 18, 20, a carcass 22 with a single carcass ply 14, two sidewalls 15,17, and two bead regions 24a, 24b comprising bead filler apexes 26a, 26b and beads 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Each axial end portion 30a or 30b of the carcass ply 14 is turned up and around the respective bead 28a, 28b to a position sufficient to anchor each axial end portion 30a, 30b, as seen in detail in FIG. 2.

The carcass ply 14 may be a rubberized ply having a plurality of substantially parallel carcass reinforcing members made of such material as polyester, rayon, or similar suitable organic polymeric compounds. The carcass ply 14 may engage the axial outer surfaces of two flippers 32a, 32b and two chippers 34a, 34b.

In accordance with the present invention, the bead regions 24a, 24b may be further reinforced with a woven reinforcing structure 141. The woven reinforcing structure 141 may comprise the parallel carcass reinforcing members (weft) 312, 512 of the carcass ply 14 within the bead regions 24a, 24b and additional reinforcement members (warp) 311, 511 for further reinforcing the bead regions and thereby reducing rolling resistance of the pneumatic tire 10. Alternatively, the reinforcing structure 141 may be knitted. The reinforcing structure 141 is of an open construction to allow rubber to enter into the structure.

One woven reinforcing structure 141 may define a layer of LENO weave fabric disposed around the beads 28a, 28b in the bead regions 24a, 24b. The woven reinforcing structure 141 reinforces the bead regions 24a, 24b and stabilizes the radially inwardmost part of the sidewalls 15, 17.

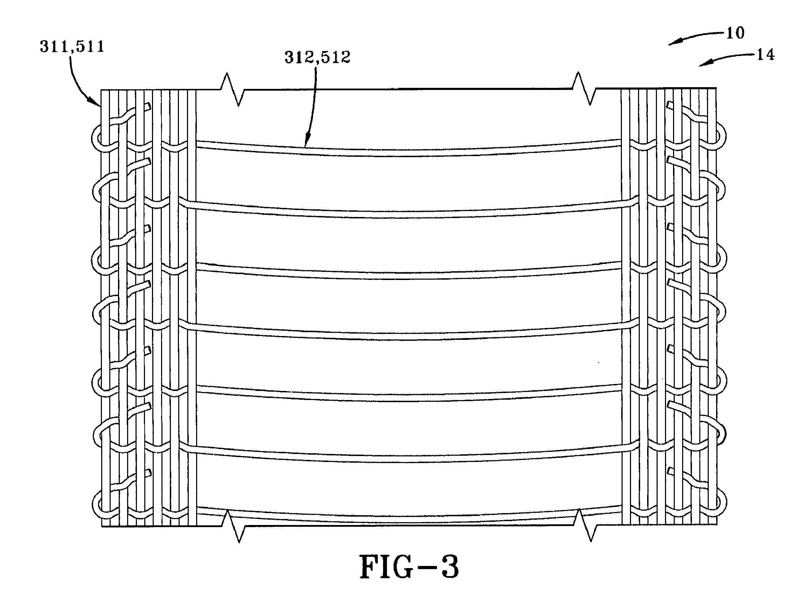

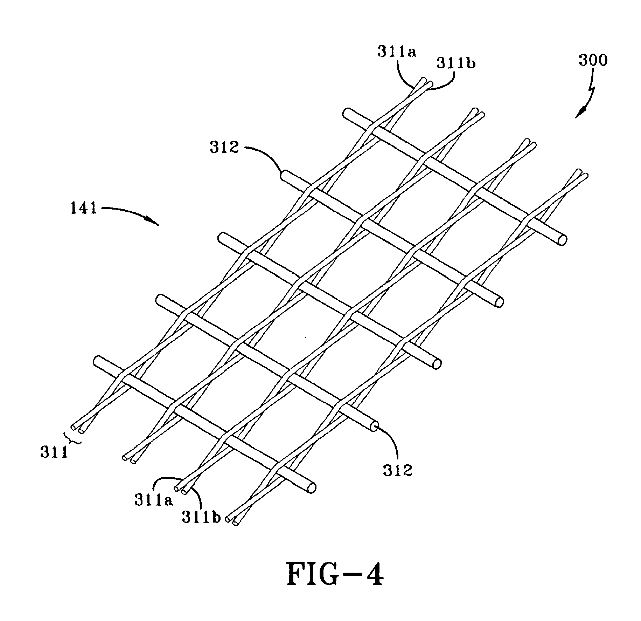

As illustrated in the example of FIGS. 3 and 4, a woven reinforcing structure 141 may comprise a layer or layers 300 of LENO fabric with warp yarn pairs 311 extending generally in a circumferential direction of the pneumatic tire 10 and weft yarns 312 from the carcass ply 14 extending generally in a radial direction of the pneumatic tire. Each warp yarn pair 311 may have warp yarns 311 a and 311 b twisting around each other between fill weft yarns 312.

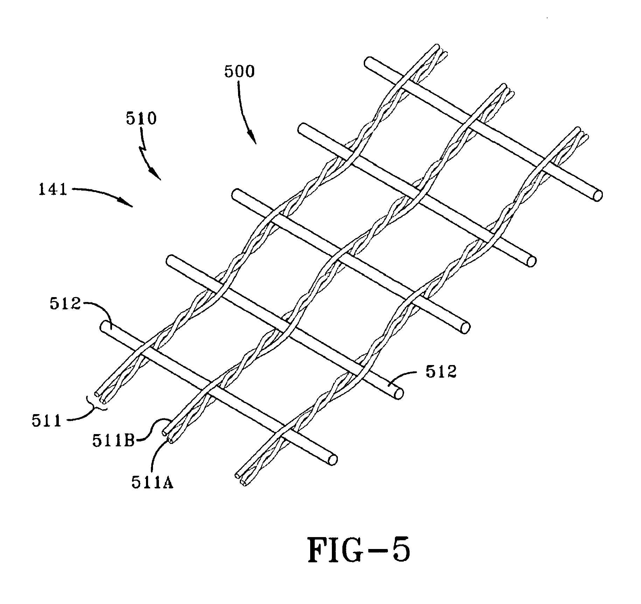

As illustrated alternatively in the example of FIGS. 3 and 5, the woven reinforcing structure 141 may comprise a layer or layers 500 of LENO 2T fabric 510 with warp yarns 511 extending generally in a circumferential direction of the pneumatic tire 10 and weft yarns 512 from the carcass ply 14 extending generally in the radial direction of the pneumatic tire. Each warp yarn 511 may have a first set of twisted pairs of filler warp yarns 511 a extending on one side of, and perpendicular to, fill weft yarns 512 and a second set of warp yarns 511 b extending generally parallel to and below the filler warp yarns 511 a and alternating above/below the weft yarns 512.

As seen in FIGS. 2 and 4, the warp yarn pairs 311 extend circumferentially along the LENO fabric 310. It is the warp yarns 311 a and 311 b that provide the reinforcement of the bead regions 24a, 24b. The construction, material, size, and spacing of the warp yarns 311 a, 311 b are selected such that they provide reinforcement for optimum rolling resistance. The warp yarns 311 a, 311 b may be a spun staple yarn, a multifilament yarn, and/or a monofilament yarn formed of a suitable material.

Examples of suitable materials for the warp yarns 311 a, 311 b include polyamide, aramids (including meta and para forms), polyester, polyvinyl acetate, nylon (including nylon 6, nylon 6,6, and nylon 4,6), polyethylene naphthalate (PEN), rayon, polyketone, carbon fiber, PBO, and glass fiber. The weft yarns 312 hold the warp yarn pairs 311 in a desired spaced apart orientation.

The weft yarns 312 may be a spun staple yarn, a multifilament yarn, and/or a monofilament yarn formed of a suitable material. Examples of suitable materials for the weft yarns 312 include polyamide, aramids (including meta and para forms), polyester, polyvinyl acetate, nylon (including nylon 6, nylon 6,6, and nylon 4,6), polyethylene naphthalate (PEN), cotton, rayon, polyketone, carbon fiber, PBO, and glass fiber.

The warp and/or weft yarns 311, 312 may also be hybrid yarns. Hybrid yarns may be multiple yarns, made up of at least 2 fibers of different material (for example, aramid and nylon). These different fiber materials may produce hybrid yarns with various chemical and physical properties. Hybrid yarns may be able to change the physical properties of the final product in which they are used. Example hybrid yarns may be an aramid fiber with a nylon fiber, an aramid fiber with a rayon fiber, and an aramid fiber with a polyester fiber.

As used herein, mechanical resiliency of a yarn is the ability of the yarn to displace longitudinally without an elastic deformation of the material. Mechanical resiliency allows the LENO fabric 310 to have a minor amount of resilient elongation for compatibility with the example tire 10, but use stronger yarns in the carcass ply 14.

The woven reinforcing structure 141 may extend radially from the axial end portions 30a, 30b of the carcass ply 14 around the beads 28a, 28b to a location 143 at the maximum section width of the pneumatic tire 10. The woven reinforcing structure 141 is an open construction fabric which permits the strike through of rubber in a tire 10 for a better bonded construction. The openness of the fabric used for the woven reinforcing structure 141 may be determined by the spacing and character of the warp yarns 311 or 511. The weft yarns 312 are typically spaced as necessary to maintain the position of the warp yarns 311 or 511 provide suitable strength to the carcass ply 14.

The woven reinforcing structure 141 may be treated with an adhesion promoter. Examples of adhesion promoters include resorcinol formaldehyde latex (RFL), isocyanate based material, epoxy based material, and materials based on melamine formaldehyde resin. The woven reinforcing structure 141 may also have a tackified finish, or green tack, applied for facilitating adhesion during the building process of a green tire. The selection of materials for the tackified finish may depend upon the materials selected for use in the tire 10. Tackified finishes may be achieved by various methods such as coating the fabric in an aqueous blend of rosin and rubber lattices, or with a solvent solution of an un-vulcanized rubber compound.

Further, the woven reinforcing structure 141 may comprise multiple layers, e.g. two, three, or even more layers, of the LENO fabric 310, 510 to provide extra strength for the bead regions 24a, 24b. When more than one layer of LENO tape 310 is used for the structure 141, a layer of unvulcanized rubber may be placed between the layers of LENO tape to ensure an effective bond.

The formation of the woven reinforcing structure 141 may begin with the acquisition of the basic yarns for the fabric. Subsequently, the yarns may be twisted to provide additional mechanical resilience. After the twisting, warp yarns 311 a, 311 b may be placed on a large beam for the formation of the woven reinforcing structure 141. The woven reinforcing structure 141 may be formed by LENO weaving with the appropriate spacing of the warp yarn pairs 311. After the woven reinforcing structure 141 formation, the structure may be finished with adhesive promoter, such as an RFL treatment. If a tackified finish is desired, this is provided following the adhesive promoter finishing. The final layer may be slit into the specific widths.

The woven or knitted reinforcing structure 141 in accordance with the present invention improves rolling resistance by optimizing mileage, high speed capability, and handling characteristics. Additionally, the woven reinforcing structure 141 may reduce noise due to vibration damping in the bead area (i.e., circumferential reinforcement provided by the warp yarns 311 or 511).

One example construction for the woven or knitted reinforcing structure 141 may comprise 2200/2 Dtex 26 EPI (ends per inch) polyester warp yarns and 1220/1 Dtex 14 EPI rayon weft yarns. In general, the warp pairs 311 may have a density of 5 EPI to 18 EPI and the weft may have a density of 5 EPI to 35 EPI.

The woven reinforcing structure 141 in accordance with the present invention thus reduces rolling resistance along with other tire performance characteristics being equal or better. The woven reinforcing structure 141 square woven fabric made of filament yarns of different stress-strain characteristics for warp and weft. The fabric 300, 500 may be produced with the Leno (standard or 2T) weaving technique. The warp yarns 311, 511 may be different modulus than the weft yarns 312, 512, or the same.

The fabric 310, 510 may be used as carcass reinforcement with only the bead regions 24a, 24b (below a maximum section width) reinforced with a warp material. The modulus increase in the radially inner section of the pneumatic tire 10 may thus decrease rolling resistance of a cured tire. The fabric 310, 510 may be dipped, tackified, and woven to the a specified ply width (FIG. 3). The fabric 300, 500 does not require calendering and may thus be applied directly at a tire building machine.

Further, there is now no requirement to calender the fabric 310, 510 or slit the material prior to application on a green tire. Rolls of fabric produced at specified width (ply width) may be supplied to a tire plant and directly applied on a tire building machine.

The warp yarn may provide a circumferential reinforcement whereas a conventional carcass provides only a radial reinforcement. The woven or knitted reinforcing structure 141 provides additional circumferential stiffness to a carcass package in the bead area, thus reducing rolling resistance.

As stated above, a carcass ply 14 with a reinforcement structure 141 in accordance with the present invention produces excellent rolling resistance performance in a pneumatic tire 10. This carcass ply 14 thus enhances the performance of the pneumatic tire 10, even though the complexities of the structure and behavior of the pneumatic tire are such that no complete and satisfactory theory has been propounded.

The carcass ply cord characteristics affect the other components of a pneumatic tire (i.e., carcass ply affects apex, belt, overlay, etc.), leading to a number of components interrelating and interacting in such a way as to affect a group of functional properties (noise, handling, durability, comfort, high speed, and mass), resulting in an unpredictable and complex composite. Thus, changing even one component can lead to directly improving or degrading many other functional characteristics, as well as altering the interaction between that one component and many other structural components. Whether these functional characteristics are improved, degraded, or unaffected, and by what amount, is unpredictable without the experimentation and testing conducted by the inventors.

Thus, for example, when the structure (i.e., twist, cord construction, etc.) of the carcass ply cords of a pneumatic tire is modified with the intent to improve one functional property of the pneumatic tire, any number of other functional properties may be unacceptably degraded. Furthermore, the interaction between the carcass ply cords and the apex, belt, carcass, and tread may also unacceptably affect the functional properties of the pneumatic tire. A modification of the carcass ply cords may not even improve that one functional property because of these complex interrelationships.

Thus, as stated above, the complexity of the interrelationships of the multiple components makes the actual result of modification of a carcass ply, in accordance with the present invention, impossible to predict or foresee from the infinite possible results. Only through extensive experimentation have the carcass ply 14 and woven reinforcement structure 141 of the present invention been revealed as an excellent option for a tire carcass.

In the above explained embodiments, the reinforcing structure 141 starts at a turn up end or an end portion 30a, 30b of the reinforced ply 14 in at least one bead region 24a, 24b of the tire 10 and extends about the respective bead 28a, 28b into the sidewall of the tire 10 between a radial outer end of a tire apex 26a, 26b and a tire shoulder area.

In an alternative embodiment, the reinforcing structure 141 may start at a turn up end or an end portion 30a, 30b of the reinforced ply (14) in at least one bead region 24a, 24b of the tire 10 and extend about the respective bead 28a, 28b radially outwards up to 10% to 100%, alternatively 30% to 65% or about 50%, of the radial height of a tire apex 26a, 26b.

In yet an alternative embodiment, the reinforcing structure 141 may start at distance from a turn up end or an end portion 30a, 30b of the reinforced ply 14 in at least one bead region 24a, 24b of the tire.

In yet an alternative embodiment, the reinforcing structure 141 may start at distance from a turn up end or an end portion 30a, 30b of the reinforced ply 14 in at least one bead region 24a, 24b of the tire 10 and extend about the respective tire bead 28a, 28b into the sidewall of the tire 10 between a radial outer end of a tire apex 26a, 26b and a tire shoulder area.

In an alternative embodiment, the reinforcing structure 141 may start at distance from a turn up end or an end portion 30a, 30b of the reinforced ply 14 in at least one bead region 24a, 24b of the tire 10 and extend about the respective bead 28a, 28b radially outwards up to 10% to 100%, alternatively 30% to 65% or about 50%, of the radial height of a tire apex 26a, 26b.

In yet an alternative embodiment, the reinforcing structure 141 at least partially extends under the tread of tire between the tire shoulder or extends at least from one tire shoulder to the other tire shoulder. In this case, the reinforcing structure is similar to a belt or a breaker and may replace a belt or a breaker in the tire.

In yet an alternative embodiment, the reinforcing structure 141 comprises at least two of said reinforcing structures 141 disposed in a spaced relationship.

In yet an alternative embodiment, the reinforcing structure 141 comprises at least three or at least four reinforcing structures 141 disposed in a spaced relationship.

In one embodiment the reinforcing structure 141 consists of one layer 300 of an open construction woven fabric or an open construction knitted fabric.

## Claims

1. A pneumatic tire comprising a tread (12) and a carcass (22) having at least one reinforced ply (14), the reinforced ply comprising a reinforcing structure (141), the reinforcing structure (141) comprising at least one layer (300) of an open construction woven or knitted fabric having warp yarns (311) extending in a first direction and weft yarns (312) extending in the radial direction or at least substantially in the radial direction of the tire (10), wherein the reinforcing structure (141) is an integral part of the reinforced ply (14).

2. The tire of claim 1 wherein the reinforced ply (14) is the single carcass ply of the tire (10).

3. The tire of at least one of the previous claims wherein the first direction is the circumferential direction of the tire (10) or.makes an angle in a range of from 1 degree to 45 degrees, alternatively from 5 degrees to 45 degrees or from 5 degrees to 30 degrees, with the circumferential direction of the tire (10).

4. The tire of at least one of the previous claims wherein the tire (10) further comprises a belt structure (16) disposed radially between the carcass (22) and the tread (12).

5. The tire of at least one of the previous claims wherein the reinforcing structure (141) is proximal to at least one bead region (24a, 24b) of the tire (10).

6. The tire of at least one of the previous claims wherein the reinforced ply (14) comprises at least two of said reinforcing structures (141) disposed in a spaced relationship.

7. The tire of at least one of the previous claims wherein the reinforcing structure (141) consists of one layer (300) of an open construction woven fabric.

8. The tire of at least one of the previous claims wherein the reinforcing structure (141) consists of one layer (300) of an open construction knitted fabric.

9. The tire of at least one of the previous claims wherein the woven or knitted fabric has a 5 ends per 2.54 cm to 18 ends per 2.54 cm warp pair construction and/or a 5 ends per 2.54 cm to 35 ends per 2.54 cm weft pair construction.

10. The pneumatic tire of at least one of the previous claims wherein the material of the weft yarns (312) is different from the material of the warp yarns (311), and/or wherein at least one of the density, the yarn construction and the dtex of the weft yarns (312) is different from the respective parameter of the warp yarns (311).

11. The pneumatic tire of at least one of the previous claims wherein the material of the weft yarns (312) is polyester and the material of the warp yarns (311) is rayon; and/or wherein the weft yarns (312) are a 2200/2 dtex or 1840/2 polyester yarns and the warp yarns (311) are a 1220/1 dtex rayon yarns.

12. The pneumatic tire of at least one of the previous claims wherein the warp yarns (311) have a density of 14 ends per 2.54 cm (epi) and the weft yarns (312) have a density of 12 ends per 2.54 cm construction; and/or wherein the warp yarns (311) have a density of at least 2 ends per 2.54 cm higher than the weft yarns (312).

13. The pneumatic tire of at least one of the previous claims wherein the weft yarns (312) and/or the warp yarns (311) comprise at least two fibers of different materials.

## Patentansprüche

1. Luftreifen umfassend eine Lauffläche (12) und eine Karkasse (22) mit mindestens einer verstärkten Lage (14), wobei die verstärkte Lage eine Verstärkungsstruktur (141) umfasst, wobei die Verstärkungsstruktur (141) mindestens eine Schicht (300) von einem Gewebe oder einer Maschenware offener Konstruktion mit Kettfäden (311), die sich in einer ersten Richtung erstrecken, und Schussfäden (312), die sich in der radialen Richtung oder zumindest im wesentlichen in der radialen Richtung des Reifens (10) erstrecken, umfasst, wobei die Verstärkungsstruktur (141) ein integrales Teil der verstärkten Lage (14) ist.

2. Reifen nach Anspruch 1, wobei die verstärkte Lage (14) die Einzelkarkasslage des Reifens (10) ist.

3. Reifen nach mindestens einem der vorhergehenden Ansprüche, wobei die erste Richtung die Umfangsrichtung des Reifens (10) ist oder einen Winkel in einem Bereich von 1 Grad bis 45 Grad, alternativ von 5 Grad bis 45 Grad oder von 5 Grad bis 30 Grad mit der Umfangsrichtung des Reifens (10) bildet.

4. Reifen nach mindestens einem der vorhergehenden Ansprüche, wobei der Reifen (10) ferner eine Gurtstruktur (16) umfasst, die radial zwischen der Karkasse (22) und der Lauffläche (12) angeordnet ist.

5. Reifen nach mindestens einem der vorhergehenden Ansprüche, wobei die Verstärkungsstruktur (141) proximal zu mindestens einem Wulstbereich (24a, 24b) des Reifens (10) ist.

6. Reifen nach mindestens einem der vorhergehenden Ansprüche, wobei die verstärkte Lage (14) mindestens zwei der Verstärkungsstrukturen (141) umfasst, die in einer beabstandeten Beziehung angeordnet sind.

7. Reifen nach mindestens einem der vorhergehenden Ansprüche, wobei die Verstärkungsstruktur (141) aus einer Schicht (300) von einem Gewebe offener Konstruktion besteht.

8. Reifen nach mindestens einem der vorhergehenden Ansprüche, wobei die Verstärkungsstruktur (141) aus einer Schicht (300) von einer Maschenware offener Konstruktion besteht.

9. Reifen nach mindestens einem der vorhergehenden Ansprüche, wobei das Gewebe oder die Maschenware 5 Enden pro 2,54 cm bis 18 Enden pro 2,54 cm Kettfadenpaarkonstruktion und/oder 5 Enden pro 2,54 cm bis 35 Enden pro 2,54 cm Schussfadenpaarkonstruktion aufweist.

10. Luftreifen nach mindestens einem der vorhergehenden Ansprüche, wobei das Material der Schussfäden (312) verschieden ist von dem Material der Kettfäden (311) und/oder wobei mindestens eines von der Dichte, der Fadenkonstruktion und dtex der Schussfäden (312) sich von dem entsprechenden Parameter der Kettfäden (311) unterscheidet.

11. Luftreifen nach mindestens einem der vorhergehenden Ansprüche, wobei das Material der Schussfäden (312) Polyester ist und das Material der Kettfäden (311) Rayon ist; und/oder wobei die Schussfäden (312) 2200/2 dtex oder 1840/2 Polyestergarn sind und die Kettfäden (311) 1220/1 dtex Rayongarn sind.

12. Luftreifen nach mindestens einem der vorhergehenden Ansprüche, wobei die Kettfäden (311) eine Dichte von 14 Enden pro 2,54 cm (epi) aufweisen und die Schussfäden (312) eine Dichte von 12 Enden pro 2,54 cm Konstruktion aufweisen; und/oder wobei die Kettfäden (311) eine Dichte von mindestens 2 Enden pro 2,54 cm mehr als die Schussfäden (312) aufweisen.

13. Luftreifen nach mindestens einem der vorhergehenden Ansprüche, wobei die Schussfäden (312) und/oder die Kettfäden (311) mindestens zwei Fasern aus unterschiedlichen Materialien aufweisen.

## Revendications

1. Bandage pneumatique comprenant une bande de roulement (12) et une carcasse (22) possédant au moins une nappe renforcée (14), la nappe renforcée (14) comprenant une structure de renforcement (141), la structure de renforcement (141) comprenant au moins une couche (300) d'une étoffe tissée ou tricotée de structure ouverte dont les fils de chaîne (311) s'étendent dans une première direction et les fils de trame (312) s'étendent dans la direction radiale ou au moins essentiellement dans la direction radiale du bandage pneumatique, la structure de renforcement (141) faisant partie intégrante de la nappe renforcée (14).

2. Bandage pneumatique selon la revendication 1, dans lequel la nappe renforcée (14) représente la nappe de carcasse unique du bandage pneumatique (10).

3. Bandage pneumatique selon au moins une des revendications précédentes, dans lequel la première direction représente la direction circonférentielle du bandage pneumatique (10) ou forme un angle dans la plage de 1° à 45°, en variante de 5° à 45° ou de 5° à 30° avec la direction circonférentielle du bandage pneumatique (10).

4. Bandage pneumatique selon au moins une des revendications précédentes, dans lequel le bandage pneumatique (10) comprend en outre une structure de ceinture (16) disposée en direction radiale entre la carcasse (22) et la bande de roulement (12).

5. Bandage pneumatique selon au moins une des revendications précédentes, dans lequel la structure de renforcement (141) est disposée en position proximale par rapport à au moins une zone de talon (24a, 24b) du bandage pneumatique (10).

6. Bandage pneumatique selon au moins une des revendications précédentes, dans lequel la nappe renforcée (14) comprend au moins deux des structures de renforcement (141) disposées à l'écart l'une de l'autre.

7. Bandage pneumatique selon au moins une des revendications précédentes, dans lequel la structure de renforcement (141) est constituée d'une seule couche (300) d'une étoffe tissée de structure ouverte.

8. Bandage pneumatique selon au moins une des revendications précédentes, dans lequel la structure de renforcement (141) est constituée d'une seule couche (300) d'une étoffe tricotée de structure ouverte.

9. Bandage pneumatique selon au moins une des revendications précédentes, dans lequel l'étoffe tissée ou tricotée possède une construction de paire de chaînes du type 5 bouts par 2,54 cm à 18 bouts par 2,54 cm et/ou une construction de paire de chaînes du type 5 bouts par 2,54 cm à 35 bouts par 2,54 cm.

10. Bandage pneumatique selon au moins une des revendications précédentes, dans lequel la matière des fils de trame (312) est différente de la matière des fils de chaîne (311) et/ou dans lequel au moins un membre choisi parmi le groupe comprenant la densité, la structure des fils et l'indice dtex des fils de trame (312) est différent du paramètre respectif des fils de chaîne (311).

11. Bandage pneumatique selon au moins une des revendications précédentes, dans lequel la matière des fils de trame (312) est du polyester et la matière des fils de chaîne (311) est de la rayonne et/ou dans lequel les fils de trame (312) représentent des fils de polyester possédant une valeur dtex de 2200/2 ou de 1840/2 et les fils de chaîne (311) représentent des fils de rayonne possédant une valeur dtex de 1220/1.

12. Bandage pneumatique selon au moins une des revendications précédentes, dans lequel les fils de chaîne (311) possèdent une densité de 14 bouts par 2,54 cm (epi) et les fils de trame (312) possèdent une densité de 12 bouts par 2,54 cm ; et/ou dans lequel les fils de chaîne (311) possèdent une densité qui est supérieure à concurrence d'au moins 2 bouts par 2,54 cm à celle des fils de trame (312).

13. Bandage pneumatique selon au moins une des revendications précédentes, dans lequel les fils de trame (312) et/ou les fils de chaîne (311) comprennent au moins deux fibres de matières différentes.
